# EUROPEAN PATENT SPECIFICATION

(11) **EP 4 252 572 B1**
(45) Date of publication and mention of the grant of the patent: **05.03.2025**
(21) Application number: 23161065.0
(22) Date of filing: 09.03.2023
(51) Int. Cl.: A43B 13/18, B33Y 10/00, B33Y 80/00

(54) **ARTICLE OF FOOTWEAR WITH DISPENSED COMPONENTS**
SCHUH MIT DISPENSIERTEN KOMPONENTEN
ARTICLE CHAUSSANT À COMPOSANTS DISTRIBUÉS

(30) Priority: 10.03.2022 US 202217691935
(43) Date of publication of application: 04.10.2023
(73) Proprietor: Reebok International Limited, Altrincham, Cheshire East WA14 2DT (GB)
(72) Inventor: GABORIAULT, Dennis, Boston, 02210 (US); CHRISTENSEN, Brian, Boston, 02210 (US); HOBSON, Daniel R., Boston, 02210 (US); VESTUTI, Ricardo, Boston, 02210 (US); SIMONE, Dustin G., Boston, 02210 (US); HAMILTON, Brian, Boston, 02210 (US); HESTERBERG, Michael, Boston, 02210 (US); COSTA, Matthew Joseph, Boston, 02210 (US); GREENHALGH, John S., Boston, 02210 (US); MILLETTE, Francis F., Boston, 02210 (US); RODRIGUEZ, Erasmo, Boston, 02210 (US)
(74) Representative: Maiwald GmbH

(56) References cited:
- US-A1- 2015 040 428
- US-A1- 2017 135 439

## Description

### BACKGROUND

### Field

Embodiments of the present invention relate generally to articles of footwear; and more specifically to articles of footwear with dispensed components.

### Background

Articles of footwear may provide functional benefits, including protecting the wearer's feet from the environment, such as surfaces and debris. Additionally, footwear may provide cushioning to the wearer's feet based on the application of the footwear (e.g., running or walking) and the wearer's anatomy. Manufacturing footwear may be expensive though, and design freedom may be limited. For example, shoe soles are traditionally made in a closed mold and require expensive tooling. Customizing a shoe sole may require a new, expensive mold. Moreover, such closed molds are limited in geometries that can be achieved and the materials that can be used. As one example, direct-soling technology has the limitations of expensive tooling, closed molds, limited geometries, material, etc. Newer techniques, such as dispensed (or extruded) components without a mold, can reduce (or eliminate) mold cost and provide more design freedom. Extruded components for articles of footwear are described in US 2017/0135439 A1. However, dispensing a shoe sole may lead to other challenges.

For example, known dispensing techniques can still require an additional step of adhering the dispensed components using adhesives, along with other labor and machinery to complete the pressing and assembly processes to form the shoe. In addition, it can be challenging to achieve a desired width for a shoe bottom, as well as a desired thickness, using dispensing techniques. As another example, controlling the dispensed material (e.g., the boundaries of the dispensed component) and achieving consistency can also be challenging. Accordingly, a need exists to improve dispensed articles of footwear components while realizing the wearer's functional needs.

### BRIEF SUMMARY

The invention is defined by the independent claims. Further embodiments are defined by the dependent claims.

In some embodiments, the dispensed components may be dispensed directly on the upper. In some embodiments, the dispensed components may be disposed on at least one of a forefoot region, a midfoot region, and a rearfoot region of the sole. In some embodiments, a dispensed component disposed on the forefoot region may include a first radius. A dispensed component disposed on the midfoot region may include a second radius different from the first radius. In some embodiments, at least one of the spiral dispensed components may extend in a lateral direction beyond a medial side of the upper. In some embodiments, at least one of the spiral dispensed components may extend onto a medial side of the upper. In some embodiments, at least one of the spiral dispensed components may extend in a lateral direction beyond a lateral side of the upper. In some embodiments, at least one of the spiral dispensed components may extend onto a lateral side of the upper.

The sole may include a dispensed component disposed on the upper. The sole may also include a sidewall. A boundary component may be disposed at a top line of the side wall.

In some embodiments, the upper may include a knit upper. The boundary component may be a raised knitted structure of the upper. In some embodiments, the upper may include a knit upper. The boundary component may be a raised knitted structure of the upper. In some embodiments, the boundary component may include a portion of the upper stitched together to form a trim. In some embodiments, the boundary component may include a frame coupled to and surrounding the upper. In some embodiments, the frame may include one or more lateral members that extend in a lateral direction underneath the upper from a medial side to a lateral side of the upper. In some embodiments, the frame may include a gutter configured to catch the dispensed component.

A method of making an article of footwear is also disclosed in claim 16.

In some embodiments, the spiral geometry of each of the first dispensed component and the second dispensed component forming a hollow portion surrounded by the layers stacked on top of each other may include dispensing the material in the hollow portion of the first dispensed component and the second dispensed component. In some embodiments, the spiral path may include an elliptical shape. In some embodiments, the method may further include placing a removable fixture around the upper prior to dispensing the material. The removable fixture may catch the dispensed material to form an outer boundary of the first dispensed component and the second dispensed component. In some embodiments, controlling the dosing rate and the velocity for the dispensing nozzle may include adjusting the dosing rate or the velocity for the dispensing nozzle while dispensing the material.

### BRIEF DESCRIPTION OF THE DRAWINGS

The accompanying drawings, which are incorporated herein and form a part of the specification, illustrate the present invention and, together with the description, further serve to explain the principles of the invention and to enable a person skilled in the pertinent art to make and use the invention.
FIG. 1 shows a medial side view of an article of footwear according to some embodiments.
FIG. 2 shows a perspective view of a plurality of spiral dispensed components according to some embodiments.
FIG. 3 shows a schematic diagram for a dispensing process according to some embodiments.
FIG. 4 shows a front view of an article of footwear and a last according to some embodiments.
FIG. 5 shows a perspective view of a continuous dispensed component for an article of footwear according to some embodiments.
FIG. 6 shows a dispensed component according to some embodiments.
FIG. 7 shows a dispensed component according to some embodiments.
FIG. 8 shows a dispensed component according to some embodiments.
FIG. 9 shows a top view of the plurality of spiral dispensed components of FIG. 2.
FIG. 10 shows a bottom view of the article of footwear of FIG. 1.
FIG. 11 shows a lateral side view of an article of footwear according to some embodiments.
FIG. 12 shows a medial side view of the article of footwear of FIG. 11 on a last.
FIG. 13 shows a lateral side view of the article of footwear of FIG. 1.
FIG. 14 shows a rear view of the article of footwear of FIG. 1.
FIG. 15 shows a medial side view of an article of footwear according to some embodiments.
FIG. 16 shows a bottom view of an upper according to some embodiments.
FIG. 17 shows a perspective view of a last and a frame according to some embodiments.
FIG. 18 shows a side view of the last and frame of FIG. 17.
FIG. 19 shows a perspective view of a last and a frame according to some embodiments.
FIG. 20 shows a perspective view of a frame according to some embodiments.
FIG. 21 shows a side view of the frame of FIG. 20.
FIG. 22 shows a perspective view of a last and a frame according to some embodiments.
FIG. 23 shows a side view of the last and frame of FIG. 22.
FIG. 24 shows a top view of an upper and a frame according to some embodiments.
FIG. 25 shows a side view of the upper and frame of FIG. 24.
FIG. 26 shows a side view of the upper and frame of FIG. 24.
FIG. 27 shows a perspective view of a last and a frame according to some embodiments.
FIG. 28 shows a medial side view of an upper according to some embodiments.
FIG. 29 shows a medial side view of the upper of FIG. 28.
FIG. 30 shows a rear view of the upper of FIG. 28.
FIG. 31 shows an enlarged lateral side view of an upper according to some embodiments.
FIG. 32 shows a lateral side view of an upper according to some embodiments.
FIG. 33 shows a perspective view of an upper and a last according to some embodiments.

### DETAILED DESCRIPTION

The present invention will now be described in detail with reference to embodiments thereof as illustrated in the accompanying drawings. References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The term "invention" or "present invention" as used herein is a non-limiting term and is not intended to refer to any single embodiment of the particular invention but encompasses all possible embodiments as described in the application.

The following examples are illustrative, but not limiting, of the present invention.

The systems and methods described herein provide articles of footwear having a sole structure comprising one or more dispensed components created by an automated dispensing process. In some embodiments, the dispensed component may be made of rubber, foam (e.g., dispensed polyurethane foam), silicone, plastic including thermoplastic (e.g., polyurethane (such as TPU), nylon, or polypropylene), or any other suitable material. In some embodiments, the dispensed component may be made of a composite material. It is understood that while the term "dispensed" is generally used herein to refer to certain materials, these materials may also be "extruded." Thus, the term "dispensed component" includes components that are dispensed and components that are extruded. These dispensed components may be dispensed from a mechanical device. In some embodiments, the dispensed components include one or more spiral dispensed components (e.g., dispensed components having a spiral geometry (either hollow or non-hollow). The spiral dispensed components may be formed by dispensing material from a dispensing nozzle moving in a spiral path.

Existing sole structures may be manufactured without use of an automated dispensing process. Such existing manufacturing processes are expensive and limit design freedom. For example, material may be poured or injected into a closed mold or cast. Once the material is ready (e.g., cured, cooled, reacted, etc.), the material may be removed. The material, retaining the shape of the mold or cast, may be used in an article of footwear. However, producing molds to achieve particular customizations is expensive. Further, the mold may not be easily altered to achieve other customizations. Thus, design freedom is impeded and new, expensive molds must be produced to create different designs and structures. Direct-soling technology similarly requires expensive tooling, closed molds, and use of certain materials.

As an alternative to molding techniques, direct dispensing techniques have been developed. A dispensed footwear component may have advantages over traditionally-formed components, such as those made by casting, pouring, injection molding, screenprinting, or thermo-plastically forming. For example, a dispensed component may be customized without having to machine a new, expensive mold. Additionally, components may be quickly created by dispensing without having to conduct the time-consuming process of creating a new mold. Indeed, a new mold may require multiple steps involving design, production, and surface treatment. The use of dispensed components may also provide the design freedom that traditional manufacturing lacks. The dispensing freedom may allow for localized, targeted dispensing to create and modify comfort support for various parts of the foot. Additionally, the dispensing process allows for the use of shapes and geometries that are difficult to achieve using conventional upper or bottom molding techniques. For example, a dispensed component may be shaped based on its output from a dispensing nozzle, which may be manipulated in terms of movement direction, rate, and time, and may utilize different output geometries (e.g., output dispensing nozzle size and shape may be varied). Moreover, the data and knowledge to make a dispensed component may be quickly deployed to any location that houses equipment and material suitable for processing.

Still, there are new challenges to address with these direct dispensing techniques. For example, a greater footwear bottom size may be difficult to achieve with direct dispensing. Increased width and height is desirable to provide protection and cushioning for a wearer's feet. However, dispensing a liquid material onto an upper to form a sole makes it difficult to achieve the desired height and width. Further, dispensing a liquid material may compromise design control, for example, creating inconsistency along a midsole top line, as the dispensed component is dispensed and before it cures. Finally, dispensed components may require additional processing to adhere to the upper, such as with adhesives, labor, or machinery. Thus, creating articles of footwear with direct dispensing may still require additional pressing and assembly processes that add time, cost, and material or effort.

The present disclosure addresses these challenges. In some embodiments, an article of footwear is provided that includes an upper (such as a knitted upper) and a sole that is formed with one or more dispensed components. In some embodiments, one or more dispensed components may form the entire sole of the article of footwear. Forming the sole with a dispensed component may provide flexibility and speed in development and manufacturing of the sole, while still meeting the functional purposes of the sole. The dispensed components may be dispensed directly onto the upper to create a sole and may adhere to the upper without requiring secondary adhesives, labor, heat, stock-fitting, pressing, cement, film, or machinery. Thus, the sole and upper may be combined to create an article of footwear in a more efficient manner.

In some embodiments, the dispensed components have a spiral geometry. The spiral geometry may result from the dispensing nozzle following a spiral path during dispensing. The spiral geometry is non-hollow (i.e., due to the liquid nature of the dispensed material and/or the tightness of the spiral, there is no hollow portion in the center of the spiral) . Spiral dispensed components may be dispensed with the advantages provided by dispensed component formation. As described herein, the spiral geometry may incrementally build a sole thickness. In some embodiments, a first layer of the spiral geometry is dispensed directly onto an upper. In some embodiments, the spiral dispensed component is continuously dispensed to form additional layers, with each of the layers stacked on top of each other. Each subsequent layer may step up incrementally on each preceding layer to create a spiral dispensed component. In some embodiments, spiral dispensed components may extend vertically from the upper. Increasing the number of layers and/or a thickness of each layer may create height. Accordingly, an ideal thickness may be achieved both overall and locally using the spiral techniques. Additionally, dispensing the spiral geometry in an elliptical shape may increase the width of the layers. Thus, an overall width and height of a sole formed with spiral dispensed components may be increased to enhance cushioning effects and achieve a larger footwear bottom. In some embodiments, the size, shape, placement, and number of spiral dispensed components along the upper may be varied to influence protection and cushioning.

Dispensed components may be dispensed directly onto an inverted upper held on a shoe last. Thus, dispensed material may drip onto the sides of the upper, creating an uncontrolled and inconsistent top line of the midsole sidewall. Various techniques may be used to control the sidewall of the midsole, particularly the top line. In some embodiments, a boundary component may be disposed at a top line to prevent dripping and control and restrain the midsole sidewall. In some embodiments, the boundary component may include a raised structure or stitched trim integrated into the upper. Additionally or alternatively, a removable, non-stick fixture may extend along the upper to support and control dispensing. In some embodiments, portions of the upper may include a textured area to receive and retain the dispensed component. In some embodiments, the textured area may include raised structures and/or recesses. The texture and localized geometry may enhance dispensing control, which may facilitate dispensing consistency and achieving a particular geometry. Additionally, dispensed component adherence may also be improved such that secondary tools for assembling the article of footwear are not needed. The textured surface may also increase dispensing control, which may significantly affect stability of the overall sole structure, allowing for stacking of layers to increase height. Accordingly, securing a first layer may provide support to each subsequent layer.

In some embodiments, the article of footwear may include or utilize any of the extruded/dispensed components or other features disclosed in U.S. Application No. 14/455,650, filed August 8, 2014, U.S. Application 14/945,077, filed November 18, 2015,
U.S. Application No. 15/644,463, filed July 7, 2017, U.S. Application No. 15/831,851, filed December 5, 2017, and/or U.S. Application No. 16/156,681 filed October 10, 2018.

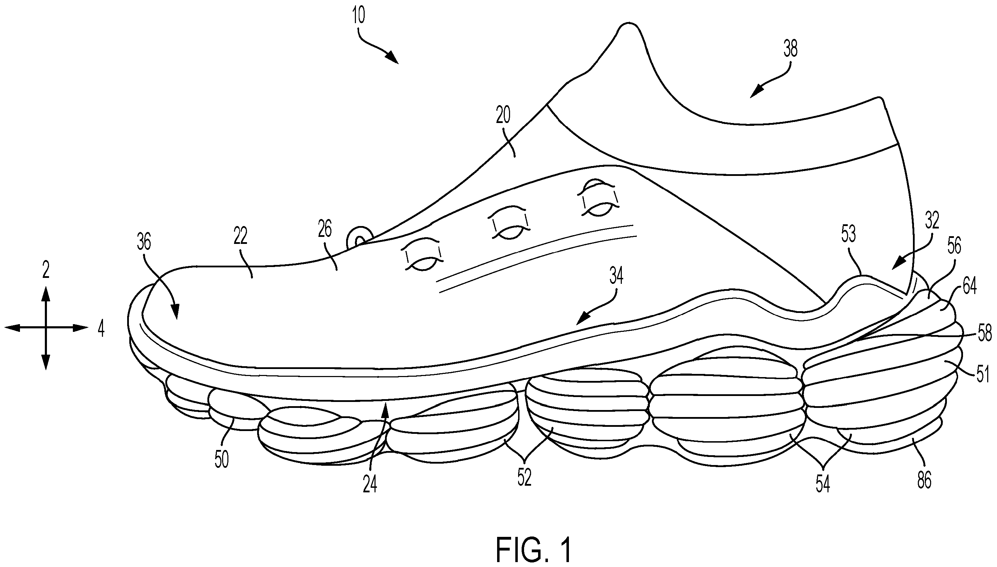

Dispensing methods and dispensed systems based on the foregoing discussion will now be described with reference to the figures. In some embodiments, dispensed components may be utilized in an article of footwear 10, as shown, for example, in FIG. 1. In some embodiments, article of footwear 10 comprises an upper 20 and a sole 50. Upper 20 may be made of a variety of materials (e.g., a textile fabric, woven or knit goods, leather, synthetic, a film product, etc.). In some embodiments, upper 20 may be a knitted upper. For example, upper 20 may be a circular knit material 22. In some embodiments, upper 20 may be made of a combination of these materials. In some embodiments, upper 20 and sole 50 are coupled together. In some embodiments, sole 50 comprises one or more dispensed components 52.

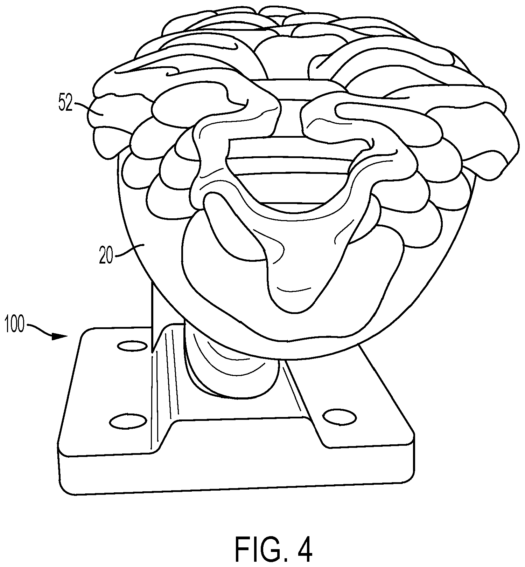

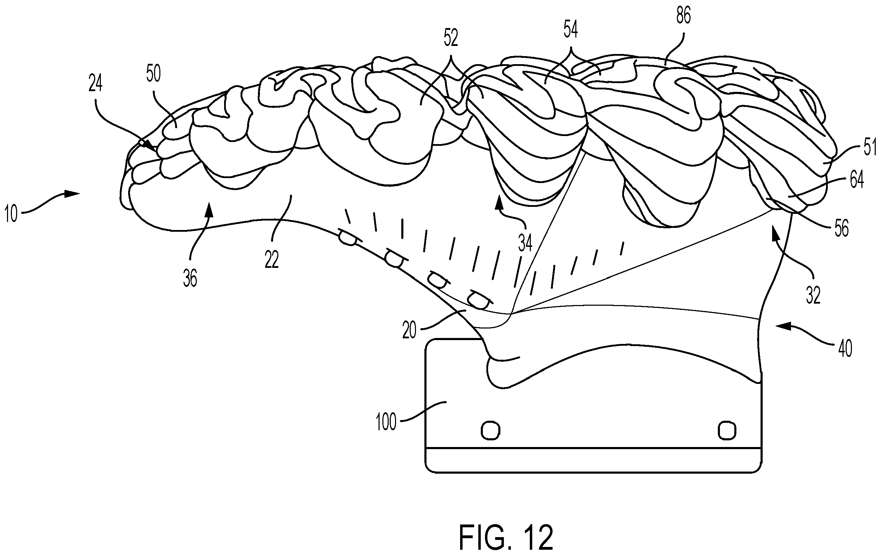

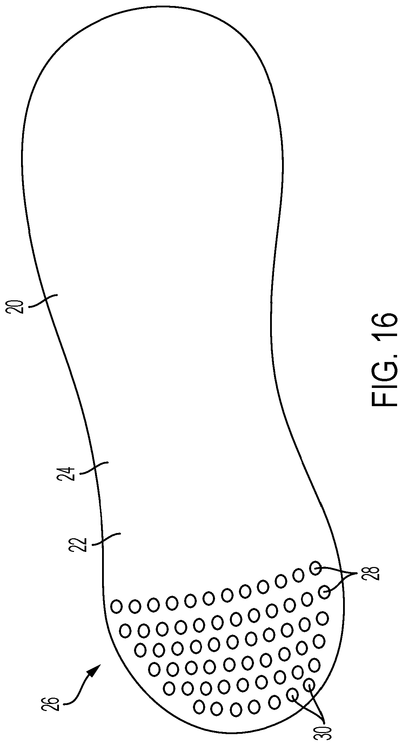

In some embodiments, article of footwear 10 may be made by directly dispensing material onto an upper 20. For example, a completed upper 20 may be placed on a shoe last form (e.g., last 100 (see FIGS. 4, 12, 17). In some embodiments, the upper 20 comprises a 3D knit upper, such as a 3D knit sock. Upper 20 may be slipped over the shoe last form and then inverted in place beneath a dispensing nozzle 110 (FIG. 16) so that the bottom of upper 20 is facing up.

At least a portion of sole 50 may be made with dispensed component 52. In some embodiments, sole 50 may be formed with one or more dispensed components 52. In some embodiments, one or more dispensed components 52 may form the entire sole 50 of article of footwear 10. Dispensed component 52 may provide a sole 50 that supports functional benefits, such as providing enhanced protection and cushioning for a wearer's feet. In some embodiments, dispensed components 52 may be dispensed directly onto upper 20 to create sole 50. Accordingly, sole 50 may be easily and quickly manufactured. In some embodiments, dispensed components 52 may adhere to the upper without requiring adhesives, additional labor, heat, stock-fitting, pressing, cement, film, or machinery to press and assemble article of footwear 10. In some embodiments, the article of footwear 10 comprises a knitted upper 20 and a sole 50 consisting of dispensed components 52. In some embodiments, the article of footwear 10 only includes the knitted upper 20 and the sole 50 consisting of dispensed components 52. Thus, there may not be any other coupling structure between the upper 20 and the sole 50 (e.g., adhesive, stitching material).

In some embodiments, dispensed components 52 may be dispensed onto a surface to provide a dispensed component that extends beyond the surface at a certain width and height profile. In some embodiments, the height, width, or geometry or physical appearance/characteristic of the dispensed components may be dynamically changed as dispensed components 52 are dispensed onto article of footwear 10, such as onto upper 20. In some embodiments, the geometry or physical appearance/characteristics of the dispensed components may be changed by dynamically changing the height of the dispensing nozzle in any direction (relative to the dispensing surface or substrate) from which the material, used to form the component, is dispensed. In some embodiments, the geometry or physical appearance/characteristics of the dispensed components may be changed by dynamically changing the speed, in any direction, at which the dispensing nozzle is moving as the material is dispensed and the component is formed. In some embodiments, the geometry or physical appearance/characteristics of the dispensed components may be changed by dynamically changing the flow rate of the material that is dispensed. Other parameters may be changed to dynamically change the height, width, or other characteristic of the dispensed components. In some embodiments, the density or viscosity of the dispensed components may be changed.

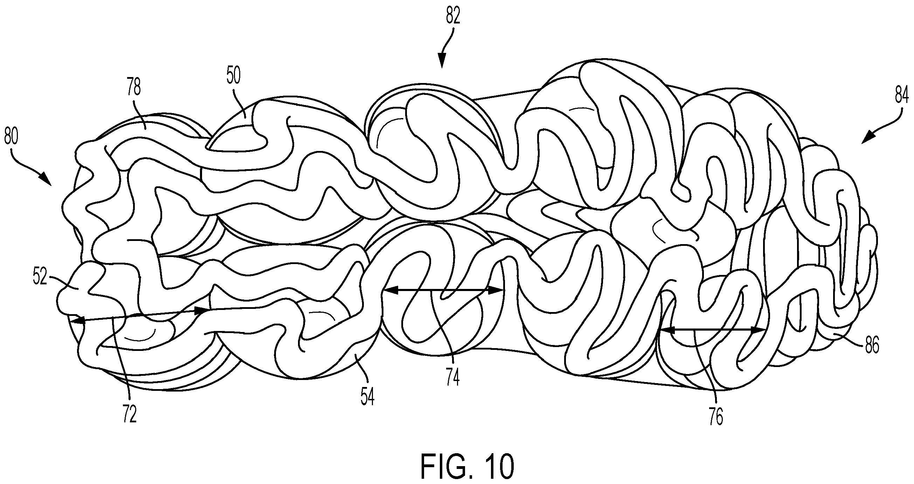

In some embodiments, dispensed component 52 may be a single, continuous component formed by a single dispense. In some embodiments, dispensed component 52 is disposed on upper 20 in a non-solid form (e.g., liquid). The dispensed components 52 may be in a variety of shapes and configurations. For example, dispensed components 52 may include stacked elongate members that continuously extend back and forth medio-laterally, pod-like forms (such as the spiral dispensed components discussed below), or a combination of these. For example, FIG. 10 shows an elongate dispensed component 78 that extends back and forth medio-laterally disposed on a bottom of a plurality of pod-like dispensed components 54. Other geometries may also be used.

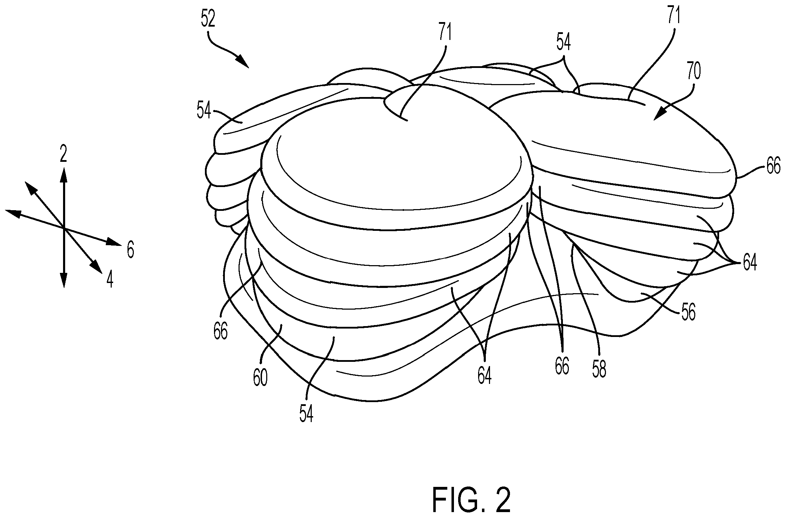

As discussed above, direct dispensing with spiral geometries may increase the size (e.g., height and width) of a footwear bottom to enhance protection and cushioning for the wearer's feet. With reference to FIG. 2, in some embodiments, dispensed component 52 has a spiral geometry to form a spiral dispensed component 54. Spiral dispensed components 54 may create height and width to build a larger footwear bottom. In some embodiments, a spiral dispensed component 54 includes a first layer 56 comprising a starting point 58 and an outer end 60. Outer end 60 is the edge of the layer that is not covered by a subsequent layer. In some embodiments, spiral dispensed component 54 includes a subsequent layer 64 comprising an outer end 66 and an end point 71. In some embodiments, spiral dispensed component 54 includes a central portion 70.

With reference to FIGS. 1-2, in some embodiments, first layer 56 of a spiral dispensed component 54 is dispensed directly onto upper 20. In some embodiments, first layer 56 of a spiral dispensed component 54 is dispensed directly onto a bottom surface 24 of upper 20. In some embodiments, spiral dispensed component 54 is dispensed onto a rearfoot region 32, a midfoot region 34, or a forefoot region 36 of upper 20. In some embodiments, starting point 58 of first layer 56 is where spiral dispensed component 54 is first dispensed. In some embodiments, first layer 56 is continuously dispensed. In some embodiments, first layer 56 begins and ends at starting point 58. In some embodiments, spiral dispensed component 54 is continuously dispensed to form a step up region 63 at starting point 58. In some embodiments, subsequent layer 64 is dispensed onto first layer 56 so that subsequent layer 64 is disposed directly on top of first layer 56. In some embodiments, subsequent layer 64 is continuously dispensed. In some embodiments, subsequent layer 64 begins at step up region 63. In some embodiments, subsequent layer 64 is continuous with step up region 63 and first layer 56.

In some embodiments, spiral dispensed component 54 comprises a plurality of subsequent layers 64. In some embodiments, each subsequent layer 64 (e.g., a second layer, a third layer, a fourth layer, etc.) may step up incrementally on each preceding layer (e.g., first layer 56 or first layer 56 and a preceding subsequent layer 64) to create a spiral dispensed component 54. In some embodiments, each subsequent layer 64 is dispensed onto another subsequent layer 64 so that each subsequent layer is disposed directly on top of the other subsequent layer 64. In this way, subsequent layers 64 may stack onto each other to build a higher sole thickness. In some embodiments, each subsequent layer 64 is stacked in a direction generally parallel to a preceding subsequent layer 64 along vertical axis 2. FIG. 2 also shows longitudinal axis 4 and lateral axis 6. In some embodiments, vertical axis 2, longitudinal axis 4, and lateral axis 6 are perpendicular axes.

The spiral geometry of spiral dispensed component 54 may be non-hollow. For example, as shown in FIG. 2, dispensed material extends across the central portion 70 of the exposed layer of the spiral dispensed component 54 to entirely fill in the space within outer end 66. The other layers (first layer 56 and subsequent layers 64) similarly have a central portion 70 that is entirely filled in within outer end 66. This may result from the liquid nature of the dispensed material running together as it is dispensed in a spiral, particularly where the spiral motion of the dispensing nozzle is a tight spiral.

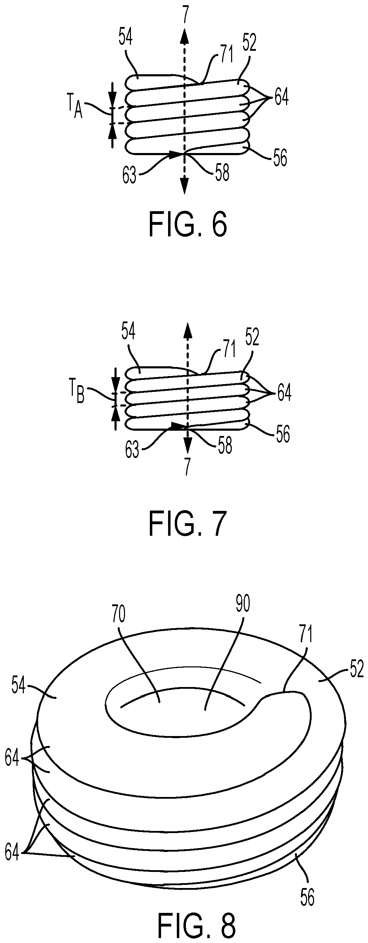

In some embodiments, the spiral geometry of spiral dispensed component 54 may be hollow. In other words, the dispensed material does not entirely run together, even if the spiral is tight, such that there is a hollow portion within central portion 70 defined by the spiral (or coiled) shape of the dispensed material. In some embodiments, the hollow portion in the center of the spiral may be filled with dispensed material after dispensing the spiral geometry, as discussed below and shown in FIG. 8.

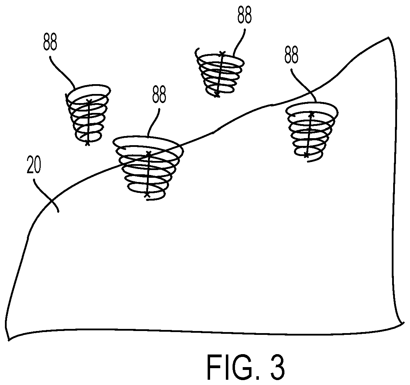

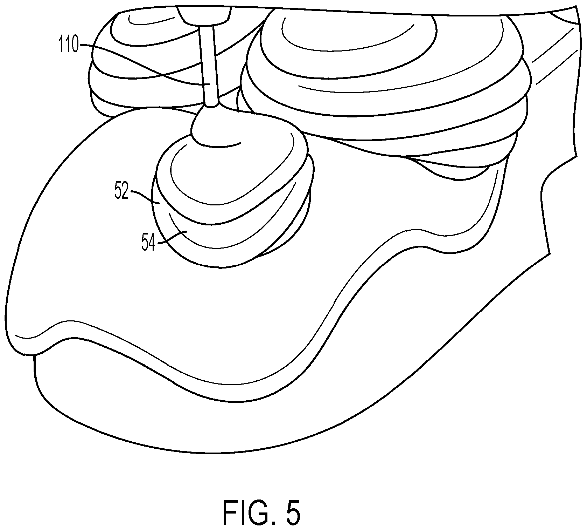

The spiral geometry of spiral dispensed component 54 may result from a dispensing nozzle following a spiral path as it dispenses. With reference to FIG. 3, dispensing programming may define the path 88 of a dispensing nozzle 110 (FIG. 5). In some embodiments, the spiral path 88 comprises a circular shape. In some embodiments, the spiral path 88 comprises an elliptical shape. With reference to FIGS. 3 and 6-7, in some embodiments, dispensing programming may define starting point 58 and dispensing of first layer 56, step up region 63, and subsequent layers 64 for each spiral dispensed component 54. In some embodiments, dispensing programming may define parameters for the spiral geometry of spiral dispensed components 54. In some embodiments, the parameters may be defined to modify a physical property of spiral dispensed component 54. In some embodiments, the path of dispensing nozzle 110 modifies physical properties of spiral dispensed component 54. In some embodiments, the physical properties may include the size, shape, and placement of spiral dispensed component 54. The parameters and physical properties defined by dispensing programing will be described further below.

As shown in FIG. 4, in some embodiments, upper 20 is secured on a last 100. In some embodiments, upper 20 is inverted on last 100. In some embodiments, dispensed components 52 are dispensed directly onto upper 20 to form sole 50 as upper 20 is secured on last 100.

In some embodiments, as shown, for example, in FIG. 5, dispensed component 52 is dispensed from a dispensing nozzle 110. In some embodiments, the relative position of dispensing nozzle 110 and upper 20 is adjustable. In some embodiments, dispensing programming may define the path of a dispensing nozzle 110. In some embodiments, the path of dispensing nozzle 110 may be defined to modify a physical property of dispensed component 52, such as a geometry. In some embodiments, the path of dispensing nozzle 110 may be defined to create dispensed component 52 with a spiral geometry, such that spiral dispensed component 54 is created.

With reference to FIGS. 4-5, in some embodiments, dispensing nozzle 110 is movable. In some embodiments, last 100 is movable. In some embodiments, both dispensing nozzle 110 and last 100 are movable. In some embodiments, dispensing nozzle 110 and/or last 100, begin to move when dispensing nozzle 110 starts dispensing. In some embodiments, last 100 is positioned on a rotating fixture or table. As the relative position of dispensing nozzle 110 and upper 20 changes, dispensing nozzle 110 continuously dispenses dispensed component 52 (e.g., spiral dispensed components 54). In some embodiments, moving dispensing nozzle 110, last 100, or both facilitates continuous dispensing along various parts of article of footwear 10 (e.g., the upper quarters, vamp, and collars, tongue). Additionally, movement expands the dispensing scope. In contrast, other processes are limited in scope, e.g., by tooling restrictions.

With reference to FIG. 6, in some embodiments, the placement of starting point 58 may be a physical property of spiral dispensed component 54 defined by the dispensing programming. In some embodiments, starting point 58 is a point along an axis 7. Accordingly, in some embodiments, first layer 56 begins and ends at starting point 58 such that first layer 56 begins and ends along axis 7. In some embodiments, subsequent layer 64 begins at step up region 63. In some embodiments, step up region 63 coincides with axis 7. Accordingly, in some embodiments, subsequent layer 64 begins along axis 7. In some embodiments, end point 71 of subsequent layer 64 is where subsequent layer 64 is last dispensed. In some embodiments, end point 71 is a point along axis 7. Accordingly, in some embodiments, subsequent layer 64 ends at end point 71 along axis 7. In some embodiments, first layer 56 and subsequent layer 64 begin and end along axis 7. In some embodiments, the placement of end point 71 may be a physical property of spiral dispensed component 54 defined by the dispensing programming.

In some embodiments, the parameters defined by dispensing programming may include a dosing rate (e.g., the amount of material that is dispensed during a unit of time) and/or a velocity for the dispensing nozzle. The dosing rate and the velocity for the dispensing nozzle may be controlled during the dispensing process to form one or more spiral dispensed components 54. For example, after positioning an upper 20 on a last 100, the dispensing nozzle 110 may dispense a material onto the upper 20 at a first location (e.g., one of the locations of spiral path 88 shown in FIG. 3) while controlling the nozzle to follow the spiral path 88. In some embodiments, this dispensing forms a first spiral dispensed component 54 having a spiral geometry with layers (first layer 56 and subsequent layers 64) stacked on top of each other, as discussed above. The dispensing nozzle 110 may then dispense the material onto the upper 20 at a second location (e.g., another one of the locations of spiral path 88 shown in FIG. 3) while controlling the nozzle to follow the spiral path 88. In some embodiments, this dispensing forms a second spiral dispensed component 54 having a spiral geometry with layers (first layer 56 and subsequent layers 64) stacked on top of each other, as discussed above. These spiral dispensed components 54 form a portion of sole 50, as shown in FIGS. 1 and 2.

The dosing rate and the velocity for the dispensing nozzle 110 may be controlled throughout this process. In some embodiments, controlling the dosing rate and the velocity for the dispensing nozzle 110 comprises adjusting the dosing rate or the velocity for the dispensing nozzle 110 while dispensing the material. In some embodiments, the dosing rate and the velocity for the dispensing nozzle 110 are kept constant during the dispensing process.

In some embodiments, the physical property affected by the dispensing programming may be a layer thickness (e.g., a first layer 56 and/or subsequent layer 64 thickness). With reference to FIGS. 6-7, in some embodiments, decreasing the velocity for the dispensing nozzle 110 and/or increasing the dosing rate may result in a larger layer thickness. Accordingly, decreasing the velocity for the dispensing nozzle 110 and/or increasing the dosing rate may result in a thicker first layer 56 and thicker subsequent layers 64. As shown in FIG. 6, the layer thickness with a slower velocity for the dispensing nozzle 110 and/or higher dosing rate may be T_{A}.

With reference to FIG. 7, in some embodiments, increasing the velocity for the dispensing nozzle 110 and/or decreasing the dosing rate may result in a smaller layer thickness. As shown in FIG. 7, the layer thickness with a faster velocity for the dispensing nozzle 110 and/or lower dosing rate may be T_{B}. In some embodiments, T_{A} (FIG. 6) may be greater than T_{B}. In some embodiments, a greater number of subsequent layers 64 may stack onto each other to build a higher sole thickness with a layer thickness of T_{B} as compared to a spiral dispensed component 54 having layers with a layer thickness of T_{A}.

As noted above, spiral dispensed component 54 may have a non-hollow spiral geometry or a hollow spiral geometry. With reference to FIG. 8, where spiral dispensed component 54 has a hollow spiral geometry, in some embodiments, a hollow central portion 70 of spiral dispensed component 54 may be subsequently filled with dispensed material 90. Accordingly, in some embodiments, dispensing programming defines the path 88 (FIG. 3) of dispensing nozzle 110 (FIG. 5) such that dispensing nozzle 110 creates first layer and subsequent layers 64 to form a hollow central portion 70 and then dispenses material 90 into central portion 70 after forming the last subsequent layer 64.

In some embodiments, end point 71 of subsequent layer 64 is where subsequent layer 64 is last dispensed. In some embodiments, after dispensing end point 71, no further subsequent layers 64 are dispensed to create a spiral dispensed component 54. In some embodiments, after dispensing end point 71, dispensing nozzle 110 (FIG. 5) fills central portion 70 with dispensed material. In some embodiments, starting point 58, first layer 56, step up region 63, subsequent layer 64, end point 71, and central portion 70 are continuously dispensed.

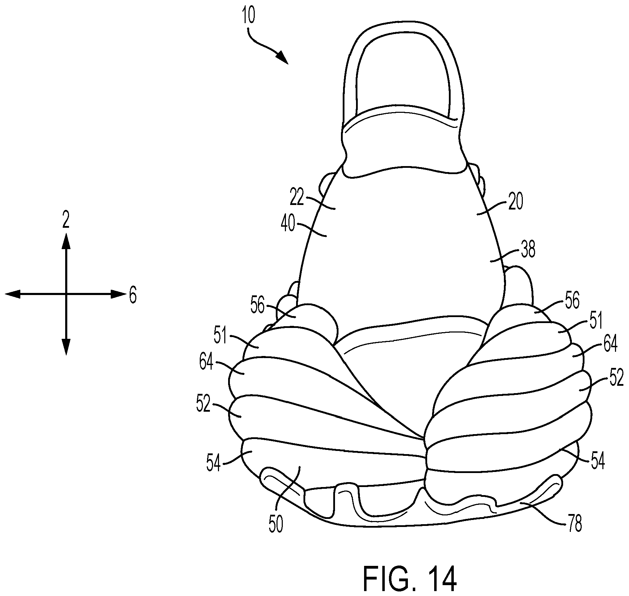

Central portion 70 may be filled with dispensed material 90 after end point 71 is dispensed. As shown in FIG. 8, in some embodiments, central portion 70 is filled with dispensed material 90 up to a point that is lower than end point 71 relative to vertical axis 2 (FIGS. 1 and 14). In some embodiments, central portion 70 is filled with dispensed material 90 up to a point that is coplanar with end point 71. In some embodiments, central portion 70 is filled with dispensed material 90 up to a point that is higher than end point 71 relative to vertical axis 2.

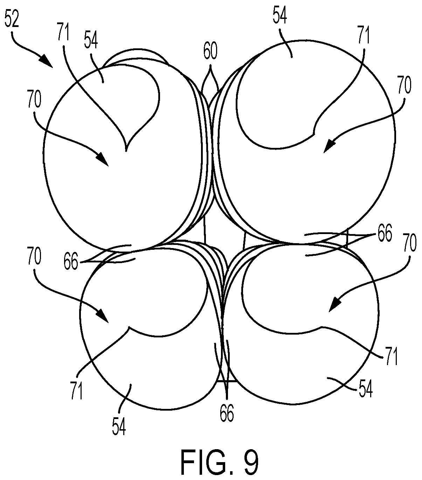

With reference to FIG. 9, in some embodiments, outer end 60 of first layer 56 contacts outer end 60 of a first layer 56 of another spiral dispensed component 54. In some embodiments, outer end 66 of subsequent layer 64 contacts outer end 66 of a subsequent layer 64 of another spiral dispensed component 54. Accordingly, layers (e.g., first layer 56 and/or subsequent layers 64) of a spiral dispensed component 54 may contact layers of another spiral dispensed component 54, while each spiral dispensed component 54 retains its shape.

In some embodiments, spiral dispensed components 54 may create a rearfoot region 80, a midfoot region 82, and/or a forefoot region 84 of sole 50 as shown in FIG. 10. In some embodiments, spiral dispensed components 54 may create an outsole 86 of sole 50. Accordingly, spiral dispensed components 54 (e.g., dispensed component 52 having a spiral geometry) may be disposed throughout the sole 50. For example, there may be spiral dispensed components in a rearfoot region 80, a midfoot region 82, and/or a forefoot region 84 of sole 50.

In some embodiments, spiral dispensed component 54 may be varied at different areas of sole 50 (e.g., rearfoot region 80, midfoot region 82, and/or forefoot region 84). In some embodiments, dispensing programming may define parameters to vary physical properties of spiral dispensed component 54 at different areas of sole 50. In some embodiments, spiral dispensed component 54 may be varied based on a number of layers (e.g., a number of subsequent layers 64 disposed on first layer 56). In some embodiments, increasing the number of layers and/or a thickness of each layer may create height in a direction parallel to vertical axis 2 (FIGS. 1 and 14). Increasing height in a direction parallel to vertical axis 2 may increase an overall thickness of sole 50 to enhance protection and cushioning for a wearer's feet and achieve a larger footwear bottom. In some embodiments, layers (e.g., first layer 56 and/or subsequent layer 64) comprises an elliptical shape. In some embodiments, comprising an elliptical shape increases the width of the layer. Increasing the width of layers may decrease the curing time. In some embodiments, the length of a layer may be increased in a direction parallel to longitudinal axis 4 (longitudinal axis 4 is shown in FIGS. 1-2), which runs along a longitudinal direction of the article of footwear 10. In some embodiments, the width of a layer may be increased in a direction parallel to lateral axis 6 (lateral axis 6 is shown in FIGS. 2 and 14), which runs along a lateral direction of the article of footwear 10.

In some embodiments, forefoot region 84 comprises between two and six spiral dispensed components 54 disposed adjacent to each other along longitudinal axis 4 (FIGS. 1-2). In some embodiments, forefoot region 84 comprises two spiral dispensed components 54 disposed adjacent to each other in a longitudinal direction (e.g., parallel to longitudinal axis 4). In some embodiments, midfoot region 82 comprises between two and six spiral dispensed components 54 disposed adjacent to each other in a longitudinal direction. In some embodiments, midfoot region 82 comprises three spiral dispensed components 54 disposed adjacent to each other in a longitudinal direction. In some embodiments, midfoot region 82 comprises two spiral dispensed components 54 disposed adjacent to each other in a longitudinal direction parallel. In some embodiments, rearfoot region 80 comprises between two and six spiral dispensed components 54 disposed adjacent to each other in a longitudinal direction. In some embodiments, rearfoot region 80 comprises three spiral dispensed components 54 disposed adjacent to each other in a longitudinal direction. In some embodiments, rearfoot region 80 comprises two spiral dispensed components 54 disposed adjacent to each other in a longitudinal direction. Other numbers of spiral dispensed components 54 disposed adjacent to each other in a longitudinal direction may be used in the various regions of sole 50. The spiral dispensed components 54 may be aligned in the longitudinal direction or be offset from each other.

In some embodiments, forefoot region 84 comprises between two and six spiral dispensed components 54 disposed adjacent to each other in a lateral direction (e.g., parallel to lateral axis 6 shown in FIGS. 2 and 14). In some embodiments, forefoot region 84 comprises two spiral dispensed components 54 disposed adjacent to each other in a lateral direction. In some embodiments, midfoot region 82 comprises between two and six spiral dispensed components 54 disposed adjacent to each other in a lateral direction. In some embodiments, midfoot region 82 comprises three spiral dispensed components 54 disposed adjacent to each other in a lateral direction. In some embodiments, midfoot region 82 comprises two spiral dispensed components 54 disposed adjacent to each other in a lateral direction. In some embodiments, rearfoot region 80 comprises between two and six spiral dispensed components 54 disposed adjacent to each other in a lateral direction. In some embodiments, rearfoot region 80 comprises three spiral dispensed components 54 disposed adjacent to each other in a lateral direction. In some embodiments, rearfoot region 80 comprises two spiral dispensed components 54 disposed adjacent to each other in a lateral direction. Other numbers of spiral dispensed components 54 disposed adjacent to each other in a lateral direction may be used in the various regions of sole 50. The spiral dispensed components 54 may be aligned in the lateral direction or be offset from each other.

Varying the number of spiral dispensed components 54 at different areas of sole 50 may facilitate targeted protection and cushioning for a wearer's foot. Additionally, increasing the number of spiral dispensed components 54 disposed in a direction parallel to longitudinal axis 4 (FIGS. 1-2) and/or lateral axis 6 (FIGS. 2 and 14) may increase an overall length and/or width of sole 50 in a direction parallel to longitudinal axis 4 and/or lateral axis 6, respectively. Increasing the length and/or width of sole 50 may increase an overall size of sole 50 to enhance protection and cushioning and achieve a larger footwear bottom. Dispensing provides flexibility for varying the number of spiral dispensed components 54 in a direction parallel to longitudinal axis 4 and/or lateral axis 6.

In some embodiments, the radius of spiral dispensed component 54 may be varied. In some embodiments, the radius of spiral dispensed component 54 may be a parameter defined by dispensing programming. In some embodiments, spiral dispensed component 54 disposed on rearfoot region 80 of sole 50 comprises a rearfoot radius 72. In some embodiments, spiral dispensed component 54 disposed on midfoot region 82 of sole 50 comprises a midfoot radius 74. In some embodiments, spiral dispensed component 54 disposed on forefoot region 84 of sole 50 comprises a forefoot radius 76. In some embodiments, rearfoot radius 72 may be the same or different from midfoot radius 74. In some embodiments, rearfoot radius 72 may be the same or different from forefoot radius 76. In some embodiments, midfoot radius 74 may be the same or different from forefoot radius 76. In some embodiments, rearfoot radius 72 may be bigger than midfoot radius 74. In some embodiments, midfoot radius 74 may be bigger than forefoot radius 76.

As shown in FIG. 10, in some embodiments, a dispensed component 52 may form a top member 78. In some embodiments, top member 78 is disposed on one or more other dispensed components 52, e.g., spiral dispensed components 54. For example, top member 78 may be dispensed over the last subsequent layer 64 of a plurality of spiral dispensed components 54. In some embodiments, top member 78 is disposed on rearfoot region 80, midfoot region 82, and/or forefoot region 84 of sole 50. In some embodiments, outsole 86 comprises top member 78. In some embodiments, the top member 78 may be dispensed so that it extends back and forth medio-laterally. For example, top member 78 may extend back and forth medio-laterally on a medial side of sole 50 and/or on a lateral side of sole 50. In some embodiments, two dispensed components 52 make up top member 78 and extend back and forth medio-laterally, with one on the medial side and one on the lateral side of sole 50. In some embodiments, a single continuous dispensed component 52 makes up top member 78 and extends back and forth medio-laterally (e.g., first on the medial side and then on the lateral side of sole 50, or vice versa).

In some embodiments, dispensing programming may manipulate the path of a dispensing nozzle 110 (FIG. 5) by defining dispensing parameters such as movement direction, rate, thickness, and time to dispense top member 78 comprising a varied design. In some embodiments, dispensing nozzle 110 may utilize different output geometries to dispense top member 78 comprising a varied design. In some embodiments, top member 78 comprises one or more layers and angles to create a varied design. In some embodiments, top member 78 comprises varying thicknesses. For example, in some embodiments, top member 78 comprises a thickness at rearfoot region 80 of sole 50 that is different from a thickness at midfoot region 82 of sole 50. In this way, top member 78 exemplifies the benefits of localized dispensing to provide targeted protection, cushioning, and/or traction. The dispensing process may facilitate dynamic designing required to create top member 78.

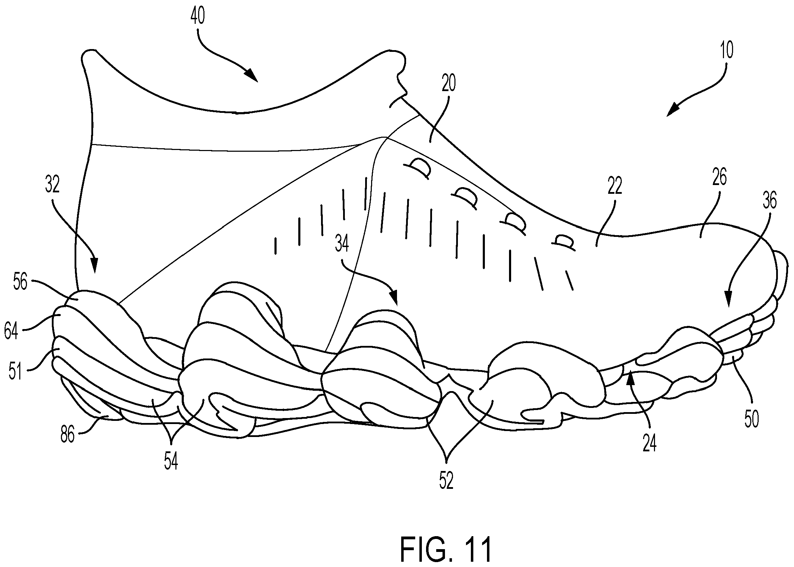

With reference to FIGS. 11-12, in some embodiments, spiral dispensed components 54 may extend onto a medial side 38 of upper 20. In some embodiments, spiral dispensed components 54 may extend onto a lateral side 40 of upper 20. In some embodiments, at least first layer 56 of spiral dispensed component 54 may extend onto medial side 38 or lateral side 40 of upper 20. In some embodiments, first layer 56 and at least one subsequent layer 64 may extend onto medial side 38 or lateral side 40 of upper 20. Accordingly, spiral dispensed components 54 may expand beyond upper 20 to build a larger footwear bottom by extending onto upper 20 itself.

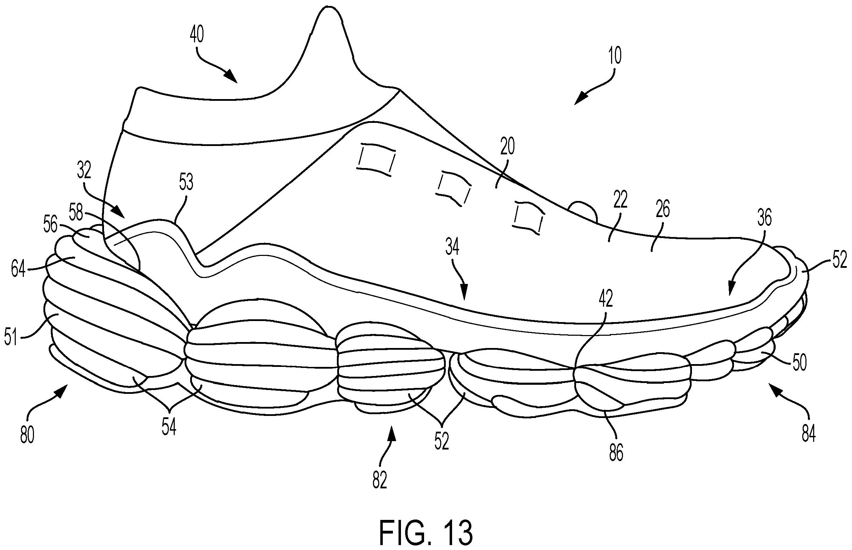

Sole 50 may also extend in lateral and longitudinal directions beyond upper 20. As shown in FIG. 13, in some embodiments, sole 50 may extend in a direction parallel to longitudinal axis 4 (FIGS. 1-2) beyond upper 20 (e.g., rearward beyond rearfoot region 32 of upper 20 or forward beyond forefoot region 36 of upper 20). In some embodiments, one or more spiral dispensed component 54 may extend in a direction parallel to longitudinal axis 4 rearward beyond rearfoot region 32 of upper 20. In some embodiments, one or more spiral dispensed component 54 may extend in a direction parallel to longitudinal axis 4 forward beyond forefoot region 36 of upper 20. In some embodiments, sole 50 and components thereof extending beyond upper 20 in a direction parallel to longitudinal axis 4 may increase an overall length of sole 50, thus increasing an overall size of sole 50 to enhance protection and cushioning of a wearer's feet by attaining a larger footwear bottom.

As shown in FIG. 14, in some embodiments, sole 50 may extend in a direction parallel to lateral axis 6 beyond upper 20 (e.g., in a lateral direction beyond medial side 38, beyond lateral side 40, or both). For example, one or more spiral dispensed component 54 may extend in a direction parallel to lateral axis 6 beyond medial side 38 of upper 20 and one or more spiral dispensed component 54 may extend in a direction parallel to lateral axis 6 beyond lateral side 40 of upper 20. Sole 50 and components thereof extending beyond upper 20 in a direction parallel to lateral axis 6 may increase an overall width of sole 50, thereby increasing an overall size of sole 50 to enhance cushioning and achieve a larger footwear bottom.

Varying the size of sole 50 and components thereof is facilitated by the flexibility provided by dispensing. Based on the foregoing, the size, placement, design, and/or number of spiral dispensed components 54 along upper 20 may be varied using dispensing to influence protection and cushioning effects. Additionally, sole 50 may incrementally extend beyond upper 20 in a direction parallel to lateral axis 6 from rearfoot region 80 and forefoot region 84 such that sole 50 extends laterally in a consistent matter. Further, each stepping up layers of spiral dispensed component 54 (e.g., first layer 56 and/or subsequent layer 64) may be created in a controlled manner. In some embodiments, dispensing programming may define parameters, such as overall and localized height, width, and length to define physical height, width, and length properties of sole 50.

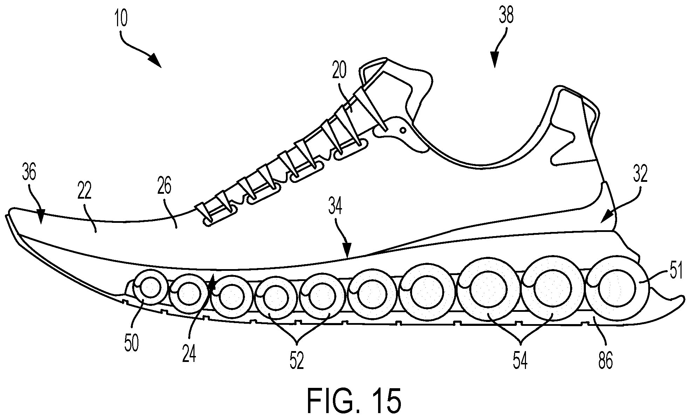

Spiral dispensed components 54 may be used in other ways to form parts of sole 50. For example, instead of being arranged in a vertical direction to create height, spiral dispensed components 54 may be arranged horizontally, as shown, for example, in FIG. 15 In some embodiments, spiral dispensed components 54 may be dispensed as a stand-alone component (e.g., by dispensing onto a non-stick material) that is subsequently integrated into a sole 50. Such spiral dispensed components 54 may be hollow or non-hollow, as discussed above. In some embodiments, spiral dispensed component 54 may be arranged in sole 50 with subsequent layers 64 stacked in a direction along longitudinal axis 4 (FIGS. 1-2). As shown in FIG. 15, in some embodiments, spiral dispensed component 54 may be arranged in sole 50 with first layer 56 and subsequent layers 64 stacked in a direction parallel to lateral axis 6 (FIGS. 2 and 14). In some embodiments, spiral dispensed components 54 arranged horizontally may be disposed between an outsole 86 and another portion of a midsole (e.g., a dispensed portion or a non-dispensed portion).

In some embodiments, sole 50 may include a sidewall 51. Sidewall 51 includes a top line 53, which defines its upper perimeter. Sidewall 51 (including top line 53) may be formed by spiral dispensed components 54. In some embodiments, sidewall 51 (including top line 53) may be formed by other types of dispensed components of various shapes. In some embodiments, sidewall 51 may include a base layer of dispensed material over which other shapes of dispensed components (such as spiral dispensed components 54) are dispensed. In some embodiments, top line 53 may be formed by such a base layer. In some embodiments, top line 53 of sole 50 may be disposed along bottom edge 42 of upper 20. In some embodiments, top line 53 may extend onto upper 20 either entirely or partially. In some embodiments, top line 53 may be linear around upper 20. In some embodiments, top line 53 may vary around upper 20 (e.g., top line 53 may comprise curves and/or edges as it extends around upper 20). In some embodiments, top line 53 may be continuous. In some embodiments, top line 53 may be discontinuous (e.g. top line 53 may be discontinuous between at least one or more spiral dispensed components 54 if sole 50 is comprised of discretely dispensed spiral dispensed components 54 or independent groupings of spiral dispensed components 54). In some embodiments, top line 53 is formed by controlling dispensing. Top line 53 may be defined and dispensed accordingly, as various structures described herein may facilitate controlled dispensing and limit fluid dripping.

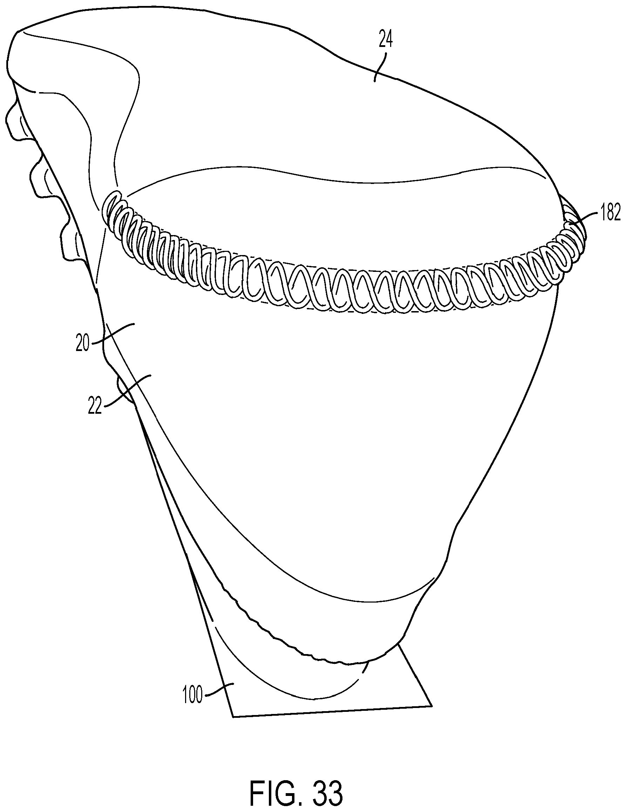

Various structures that may be used to better control the dispensing process and limit fluid dripping are described below with reference to FIGS. 16-33. Structures may support adherence of dispensed components to article of footwear 10, such as to upper 20. Other structures may limit fluid dripping as dispensed components 52 are dispensed to create sole 50. Such structures may provide a consistent top line 53 of the sidewall 51 formed by the dispensed components 52. In some embodiments, these structures are removable so that the structures may be removed once the dispensed material is cured. In some embodiments, these structures are part of the article of footwear 10. For example, the structure may be an integral part of the upper 20 or it may be a separate component that is coupled to the upper 20.

As shown in FIG. 16, in some embodiments, upper 20 comprises a textured area 26. In some embodiments, bottom surface 24 of upper 20 comprises a textured area 26. In some embodiments, textured area 26 comprises a localized geometry. In some embodiments, textured area 26 comprises one or more raised structures 28. In some embodiments, raised structure 28 is disposed on upper 20. In some embodiments, raised structure 28 is formed from upper 20. In some embodiments, raised structure 28 comprises knit material 22 of upper 20. In some embodiments, textured area 26 comprises one or more recesses 30. In some embodiments, recesses 30 are formed in upper 20. In some embodiments, textured area 26 comprises one or more raised structures 28 and one or more recesses 30.

In some embodiments, dispensed component 52 is disposed on textured area 26 of upper 20. Textured area 26 may enhance dispensing control to improve dispensing consistency and achieve a particular geometry of dispensed component 52. Textured area 26 may also improve adherence of dispensed component 52, which may provide structure and support to spiral dispensed component 54 and parts thereof. First layer 56 adherence, control, and support may increase the stability of subsequent layers 64 and spiral dispensed component 54 overall.

As noted above, a variety of structures may be used to limit fluid dripping as dispensed components 52 are dispensed to create sole 50, thus controlling to the dispensing to form a desired top line. Such structures provide a boundary component. Various configurations for a boundary component are discussed below. A boundary component may facilitate dispensing control on upper 20 by limiting fluid dripping. When attached to upper 20 on last 100, the boundary component may isolate dispensed material such that the dispensed material does not flow to the underside of the boundary component. In this way, boundary components may create a barrier (e.g., a shutoff) between the dispensed material and upper 20.

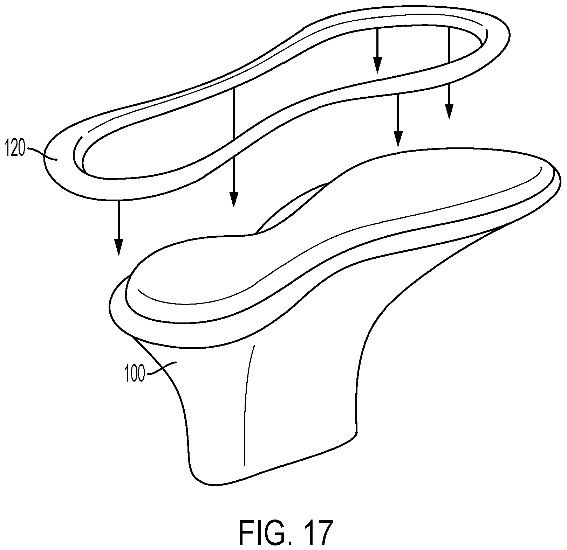

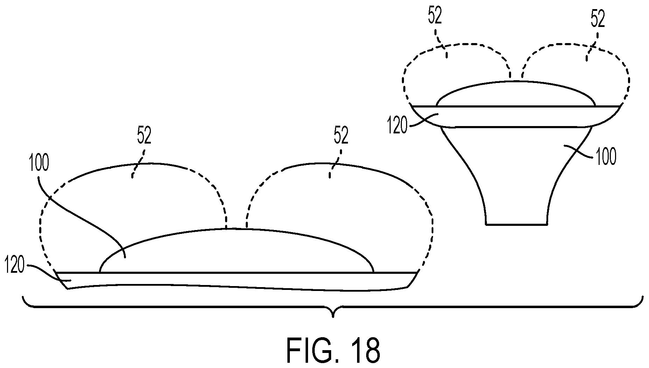

As shown in FIG. 17, in some embodiments, a frame 120 is used as the boundary component for controlling dispensing on upper 20. In some embodiments, frame 120 is slipped onto last 100. In some embodiments, frame 120 is secured around last 100 via a friction fit. In some embodiments, frame 120 is secured onto last 100 around upper 20 disposed on last 100. With reference to FIG. 18, in some embodiments, frame 120 may enhance dispensing control of dispensed components 52 and limit fluid dripping. Accordingly, as dispensing material is disposed onto upper 20, the material does not drip beyond frame 120. In some embodiments, frame 120 is non-stick such that dispensing material does not adhere to frame 120. In some embodiments, frame 120 is coated with Teflon^{™}. In some embodiments, frame 120 may limit dispensing material from dripping beyond frame 120. In some embodiments, frame 120 remains as part of the finished article of footwear 10.

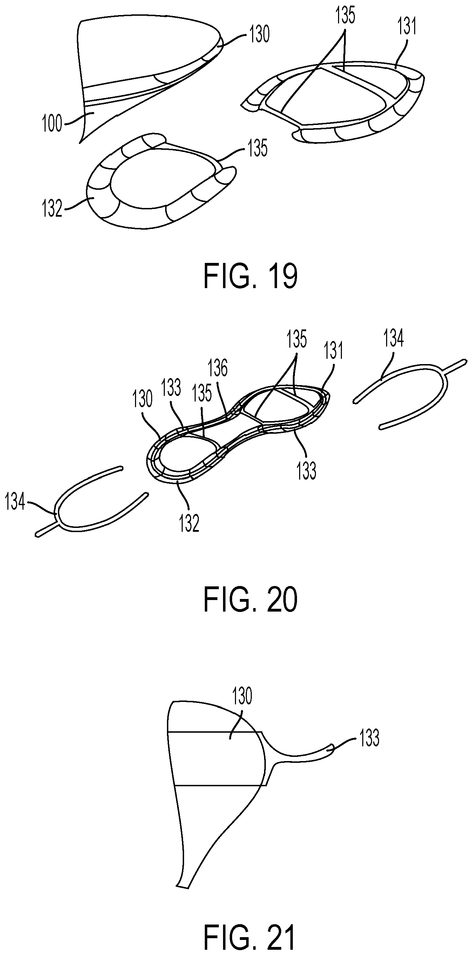

As shown in FIG. 19, in some embodiments, a frame 130 is used as the boundary component for controlling dispensing on upper 20. In some embodiments, frame 130 comprises a forefoot part 131 and a heel part 132. In some embodiments, forefoot part 131 and heel part 132 are separate parts that are slipped onto last 100. In some embodiments, forefoot part 131 and heel part 132 secure around last 100 via a friction fit. In some embodiments, forefoot part 131 and heel part 132 contact each other when secured to last 100 such that frame 130 extends entirely around last 100. In some embodiments, there is a gap between forefoot part 131 and heel part 132. With reference to FIG. 20, in some embodiments, forefoot part 131 and heel part 132 are not separate components, but portions of one integral frame 130. In some embodiments, forefoot part 131 and heel part 132 are secured around upper 20 disposed on last 100. In some embodiments, frame 130 is non-stick such that dispensing material does not adhere to frame 130. In some embodiments, frame 130 is coated with Teflon^{™}.

Frame 130 may also include one or more intermediate members 135. To provide structural support to frame 130. As shown in FIGS. 19-20, intermediate members 135 may extend across the width of frame 130. In some embodiments, frame 130 may include between one and ten intermediate members 135, such as between two and five intermediate members 135, such as three intermediate members 135. Frame 130 may include intermediate members 135 on forefoot part 131 and/or heel part 132. For example, forefoot part 131 may include two intermediate members 135 and heel part 132 may include one intermediate member 135. In some embodiments with separable forefoot part 131 and heel part 132, intermediate members 135 may bound the open ends of forefoot part 131 and heel part 132. Intermediate members 135 may rest on top of last 100, which may help secure frame 130 in place during the dispensing process.

As shown in FIGS. 20-21, in some embodiments, forefoot part 131 and heel part 132 each comprise a gutter 133. In some embodiments, gutter 133 is u-shaped and extends around forefoot part 131 and heel part 132. In some embodiments, gutter 133 may catch dispensed material, as the material is disposed onto upper 20 (FIG. 15). Accordingly, gutter 133 may be a dam that collects residual dispensed material. In this way, frame 130 may help limit material dripping onto upper 20 and last 100, and may collect excess material in gutter 133. In some embodiments, gutter 133 comprises a thickness of approximately one millimeter. In some embodiments, frame 130 remains as part of the finished article of footwear 10.

In some embodiments, forefoot part 131 and/or heel part 132 are thin and/or flexible. As shown in FIG. 20, in some embodiments, forefoot part 131 and/or heel part 132 comprises spring wire 134. In some embodiments, spring wire 134 may be made of a spring grade metal. In some embodiments, spring wire 134 is attached to the forefoot part 131 and/or heel part 132. For example, frame 130 may include a recess 136 that extends around forefoot part 131 and/or heel part 132. In some embodiments, recess 136 is disposed along gutter 133. In some embodiments, recess 136 is disposed on top of gutter 133. In some embodiments, recess 136 is disposed along the underside of gutter 133. Recess 136 may receive spring wire 134 (e.g., spring wire 134 may clip into recess 136). Spring wire 134 may reinforce frame 130 in creating a barrier (e.g., a shutoff) between frame 130 and upper 20 by making frame 130 more robust. Accordingly, dispensed material is less likely to or prevented from flowing past frame 130 and onto upper 20. In this way, spring wire 134 supports frame 130 in forming a boundary component for controlling dispensing on upper 20 and isolating the underside of frame 130 from dispensed material collected by frame 130.

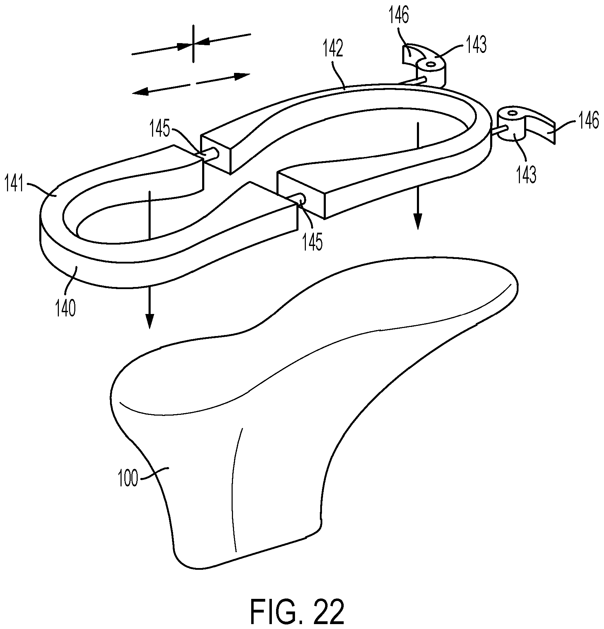

Other types of frames may also be used as the boundary component. In some embodiments, rather than a frame that remains as part of the finished article of footwear, a removable frame may be used. For example, a frame 140, as shown in FIG. 22, may be used as the boundary component for controlling dispensing on upper 20. In some embodiments, frame 140 is slipped onto last 100. Rather than being secured around last 100 via a friction fit when it is slipped onto last 100, frame 140 may include a cam lock system that adjusts the size of frame 140 to facilitate easy installation on and removal from last 100. Thus, frame 140 may be secured around upper 20 disposed on last 100 by tightening frame 140 with cam locks 143. In some embodiments, frame 140 comprises a forefoot part 141 and a heel part 142. In some embodiments, forefoot part 141 and heel part 142 contact each other when tightened around last 100 such that frame 140 extends entirely around last 100.

Forefoot part 141 and heel part 142 may be quickly and easily fit together and onto last 100. In some embodiments, rods 145 separate forefoot part 141 and heel part 142. Rods 145 may connect forefoot part 141 and heel part 142. At least one of forefoot part 141 and heel part 142 may be pushed inward over rods 145 such that forefoot part 141 and heel part 142 are in contact via cam locks 143. In some embodiments, as frame 140 is slipped onto last 100, at least one of forefoot part 141 and heel part 142 may be pushed inward over rods 145 to secure frame 140 around upper 20 disposed on last 100. In some embodiments, frame 140 is secured to last 100 via one or more cam locks 143. Cam locks 143 may tighten frame 140 around upper 20 disposed on last 100. In some embodiments, cam locks 143 may be disposed on forefoot part 141. Additionally or alternatively, cam locks 143 may be disposed on heel part 142. Each cam lock 143 may include a lever 146 that, when pushed, may pull forefoot part 141 and heel part 142 towards each other over rods 145. In some embodiments, levers 146 may be released to allow forefoot part 141 and heel part 142 to extend away from each other such that rods 145 show between forefoot part 141 and heel part 142. As forefoot part 141 and heel part 142 are extended away from each other, frame 140 may be removed from last 100, which then allows upper 20 to be removed from last 100.

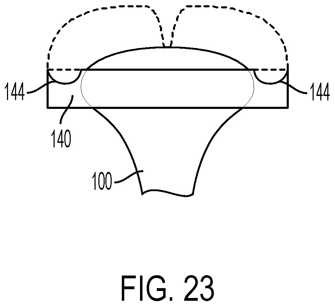

In some embodiments, frame 140 is non-stick such that dispensing material does not adhere to frame 140. In some embodiments, frame 140 is coated with Teflon^{™}. As shown in FIG. 23, in some embodiments, frame 140 (e.g., forefoot part 141 and/or heel part 142) comprise a gutter 144. In some embodiments, gutter 144 is u-shaped and extends around frame 140. In some embodiments, gutter 144 may catch dispensed material, as the material is disposed onto upper 20. In this way, frame 140 may limit material dripping onto upper 20 (FIG. 15) and last 100, and may collect excess material in gutter 133. In some embodiments, gutter 144 comprises a thickness of approximately one millimeter. In some embodiments, frame 140 is opened or removed from last 100 once the dispensing material is ready and/or article of footwear 10 (FIG. 1) is complete.

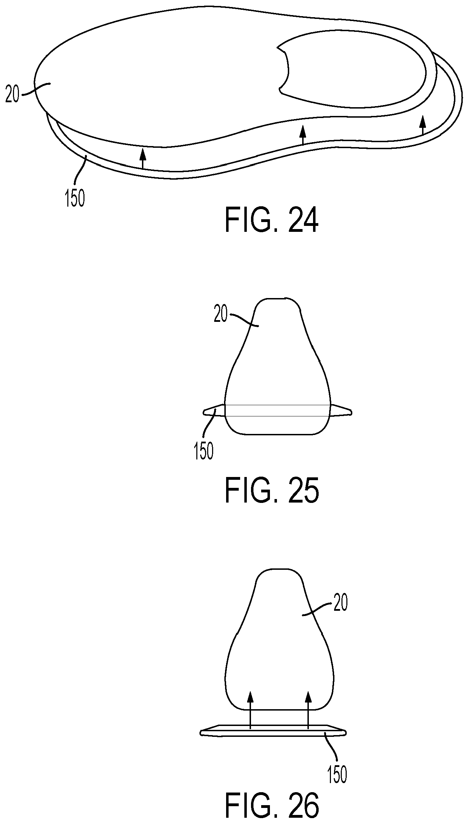

Various frames may be used to control dispensing on upper 20 (FIG. 15), such as frame 150 shown in FIG. 24. In some embodiments, frame 150 is secured around upper 20. In some embodiments, frame 150 is cemented to upper 20. With reference to FIG. 25, in some embodiments, frame 150 is ring-shaped and extends around upper 20. In some embodiments, frame 150 is a polypropylene ring. In this way, frame 150 may limit material dripping onto upper and last 100 (FIG. 15). With reference to FIG. 26, in some embodiments, frame 150 is pushed upwards relative to upper 20 to secure around upper 20.

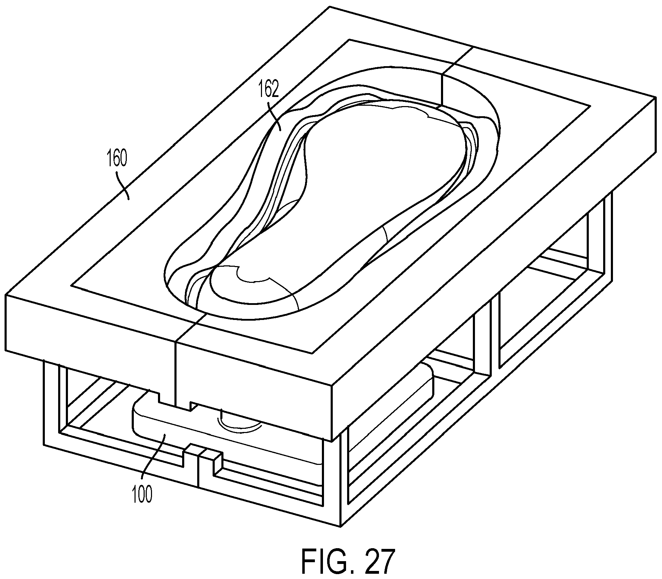

In some embodiments, a frame 160 shown in FIG. 27 is used for controlling dispensing on upper 20 (FIG. 15). In some embodiments, last 100 is disposed within frame 160. In some embodiments, frame 160 includes one or more recesses 162 to catch dispensed material, as the material is disposed onto upper 20. In this way, frame 160 may limit material dripping onto upper 20 and last 100, and may collect excess material in recess 162. In some embodiments, frame 160 is removable. In some embodiments, frame 160 is removed once the dispensing material is ready and/or article of footwear 10 (FIG. 1) is complete.

In some embodiments, the boundary component for dispensing control may be an integral part of the upper. This eliminates the need for a separate component. Various example boundary components are discussed below.

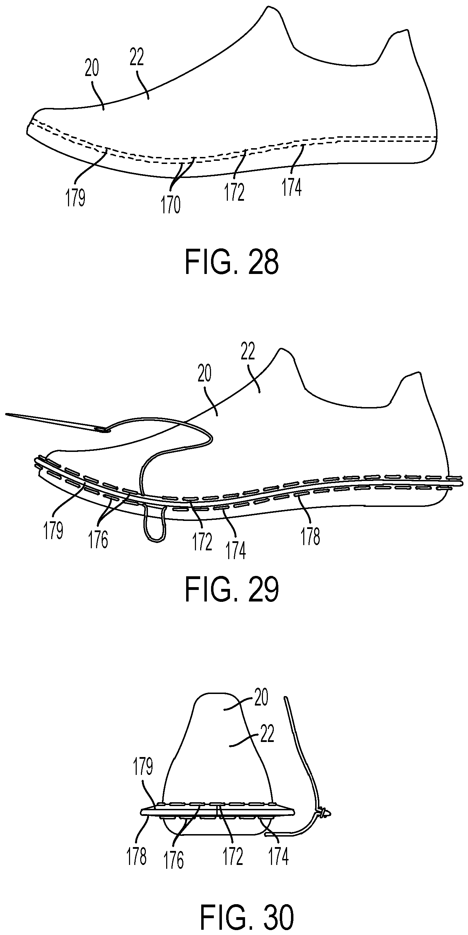

In some embodiments, the boundary component comprises a stitched together portion of upper 20. As shown in FIGS. 28-29, in some embodiments, gathering stitches 176 may stitch together two portions 170 of upper 20 to form a boundary component 178 (FIG. 30). Boundary component 178 may be a portion 179 of upper 20 between portions 170. In some embodiments, two rows, upper row 172 and lower row 174, are the portions 170 of upper 20 that are stitched together. Gathering stitches 176 may be stitched along upper row 172 and lower row 174. In some embodiments, knit material 22 of upper 20 is elastic. In some embodiments, gathering stiches 176 along upper row 172 and lower row 174 pull portion 179 of upper 20 between upper row 172 and lower row 174. As shown in FIG. 30, portion 179 of upper 20 between upper row 172 and lower row 174 forms boundary component 178. Boundary component 178 comprises knit material 22 of upper 20 such that it is integrated with upper 20. Boundary component 178 extends from upper 20 to form a rim around upper 20. In some embodiments, boundary component 178 may catch dispensed material, as the material is disposed onto upper 20. In this way, boundary component 178 may limit material dripping onto upper 20 and last 100, and may collect excess material on boundary component 178. In some embodiments, gathering stitches 176 remain on upper 20 in a completed article of footwear 10. In some embodiments, boundary component 178 may include a lace or a string. The lace or string may support dispensing control during a dispensing process (e.g., by providing a landmark or guide for dispensing).

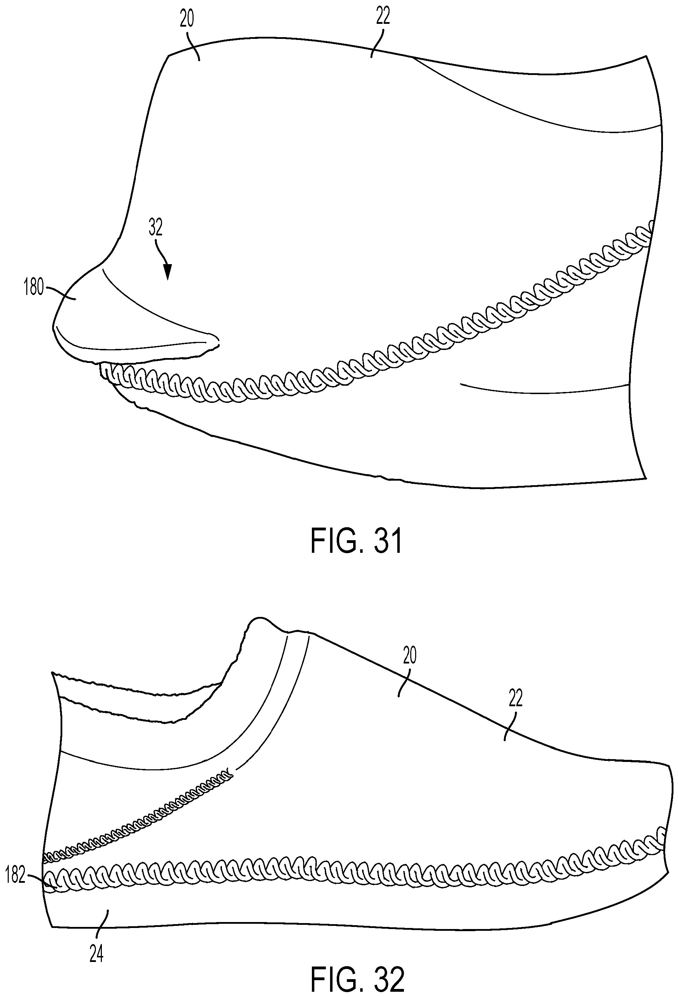

Upper 20 may be knit to include one or more control structures to facilitate dispensing control during a dispensing process. As shown in FIG. 31, in some embodiments, upper 20 can include a rear control structure 180. In some embodiments, rear control structure 180 is formed from the knitting process. For example, a knitting pattern can be changed at the location of rear control structure 180 to form rear control structure 180 (e.g., using different types of knitting stitches, using additional yarns, etc.). The change in knitting pattern may add texture to the upper 20 at the desired location, thus forming a boundary component, such as rear control structure 180. Rear control structure 180 may thus comprise knit material 22 of upper 20 such that it is integrated into upper 20. In some embodiments, various portions of upper 20 may be stitched together to form rear control structure 180.

As shown in FIG. 31, in some embodiments, rear control structure 180 is disposed on rearfoot region 32 of upper 20. In some embodiments, rear control structure 180 facilitates dispensing control during a dispensing process (e.g., by providing a landmark or guide for dispensing). In some embodiments, rear control structure 180 is part of a completed article of footwear 10.

As shown in FIG. 32, in some embodiments, upper 20 can include a bottom control structure 182 as a boundary component. In some embodiments, bottom control structure 182 is formed from the knitting process. For example, a knitting pattern can be changed at the location of bottom control structure 182 to form bottom control structure 182 (e.g., using different types of knitting stitches, using additional yarns, etc.). The change in knitting pattern may add texture to the upper 20 at the desired location, thus forming a boundary component, such as bottom control structure 182. Bottom control structure 182 may thus comprise knit material 22 of upper 20 such that it is integrated into upper 20. In some embodiments, various portions of upper 20 may be stitched together to form bottom control structure 182. As shown in FIGS. 32-33, in some embodiments, bottom control structure 182 is disposed around bottom surface 24 of upper 20. For example, bottom control structure 182 may extend entirely around upper 20, or it may be disposed in only certain portions of upper 20 (e.g., on a medial side, lateral side, or both). In some embodiments, bottom control structure 182 facilitates dispensing control during a dispensing process (e.g., by providing a landmark or guide for dispensing). In some embodiments, bottom control structure 182 is part of a completed article of footwear 10.

As noted above, any of the foregoing boundary components may be used to form a top line of dispensed components (e.g., top line 53). The techniques may be used to form a top line for a spiral dispensed component 54, as well as any other shape of dispensed component, such as a component that is dispensed on an upper simply to form a base layer of dispensed material, similar to top line 53. Thus, the boundary components, like the top line, may take a variety of shapes, including a boundary component that extends mostly linearly along a medial and/or lateral side of the article of footwear or a boundary component that includes more curves (e.g., peaks and valleys) as it extends along a medial and/or lateral side of the article of footwear.

It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims.

## Claims

1. An article of footwear comprising:
an upper (20); and
a sole (50) coupled to the upper (20) and comprising dispensed components having a non- hollow spiral geometry, each spiral dispensed component extending vertically with layers (64) of the spiral geometry stacked on top of each other,
wherein the spiral dispensed components are disposed adjacent to each other along a longitudinal direction of the sole (50).

2. The article of footwear of claim 1, wherein the dispensed components are dispensed directly on the upper (20).

3. The article of footwear of claim 1, wherein the dispensed components are disposed on at least one of a forefoot region (36, 84), a midfoot region (34, 82), and a rearfoot region (32, 80) of the sole (50).

4. The article of footwear of claim 3, wherein a dispensed component disposed on the forefoot region (36, 84) comprises a first radius, and
wherein a dispensed component disposed on the midfoot region (34, 82) comprises a second radius different from the first radius.

5. The article of footwear of claim 1, wherein at least one of the spiral dispensed components extends in a lateral direction beyond a medial side (38) of the upper (20).

6. The article of footwear of claim 1, wherein at least one of the spiral dispensed components extends onto a medial side (38) of the upper (20).

7. The article of footwear of claim 1, wherein at least one of the spiral dispensed components extends in a lateral direction beyond a lateral side (40) of the upper (20).

8. The article of footwear of claim 1, wherein at least one of the spiral dispensed components extends onto a lateral side (40) of the upper (20).

9. The article of footwear of claim 1, wherein a first spiral dispensed component comprises a first number of layers (64) of the spiral geometry, and
wherein a second spiral dispensed component comprises a second number of layers (64) of the spiral geometry different from the first number of layers (64).

10. The article of footwear of claim 1, further comprising:
a boundary component (178) disposed at a top line (53) of a sidewall (51) of the sole (50).

11. The article of footwear of claim 10, wherein the upper (20) comprises a knit upper (20), and wherein the boundary component (178) is a raised knitted structure of the upper (20).

12. The article of footwear of claim 10, wherein the boundary component (178) comprises a portion of the upper (20) stitched together to form a trim.

13. The article of footwear of claim 10, wherein the boundary component (178) comprises a frame (120, 130, 140, 150, 160) coupled to and surrounding the upper (20).

14. The article of footwear of claim 13, wherein the frame (120, 130, 140, 150, 160) comprises one or more lateral members that extend in a lateral direction underneath the upper (20) from a medial side (38) to a lateral side (40) of the upper (20).

15. The article of footwear of claim 13, wherein the frame (120, 130, 140, 150, 160) comprises a gutter (133, 144) configured to catch the dispensed component.

16. A method of making an article of footwear, the method comprising:
positioning an upper (20) on a last;
dispensing a material from a dispensing nozzle (110) onto the upper (20) at a first location while controlling the nozzle to follow a spiral path (88), the dispensing forming a first dispensed component having a spiral geometry with layers (64) stacked on top of each other;
dispensing the material from the dispensing nozzle (110) onto the upper (20) at a second location while controlling the nozzle to follow a spiral path (88), the dispensing forming a second dispensed component having a spiral geometry with layers (64) stacked on top of each other; and
controlling a dosing rate and a velocity for the dispensing nozzle (110),
wherein the first dispensed component and the second dispensed component form a portion of a sole (50) for the article of footwear.

17. The method of claim 16, wherein the spiral geometry of each of the first dispensed component and the second dispensed component forms a hollow portion surrounded by the layers (64) stacked on top of each other, further comprising:
dispensing the material in the hollow portion of the first dispensed component and the second dispensed component.

18. The method of claim 16, wherein the spiral path (88) comprises an elliptical shape.

19. The method of claim 16, further comprising placing a removable fixture around the upper (20) prior to dispensing the material, wherein the removable fixture is configured to catch the dispensed material to form an outer boundary of the first dispensed component and the second dispensed component.

20. The method of claim 16, wherein controlling the dosing rate and the velocity for the dispensing nozzle (110) comprises adjusting the dosing rate or the velocity for the dispensing nozzle (110) while dispensing the material.

## Patentansprüche

1. Schuhwerk-Artikel, umfassend:
ein Oberteil (20); und
eine Sohle (50), die mit dem Oberteil (20) gekoppelt ist und ausgegebene Komponenten mit einer nicht hohlen Spiralgeometrie umfasst, wobei sich jede spiralförmige ausgegebene Komponente vertikal erstreckt und Schichten (64) der Spiralgeometrie übereinander gestapelt sind,
wobei die spiralförmigen ausgegebenen Komponenten entlang einer Längsrichtung der Sohle (50) benachbart zueinander angeordnet sind.

2. Schuhwerk-Artikel nach Anspruch 1, wobei die ausgegebenen Komponenten direkt auf das Oberteil (20) ausgegeben sind.

3. Schuhwerk-Artikel nach Anspruch 1, wobei die ausgegebenen Komponenten auf einem Vorfußbereich (36, 84) und/oder einem Mittelfußbereich (34, 82) und/oder einem Rückfußbereich (32, 80) der Sohle (50) angeordnet sind.

4. Schuhwerk-Artikel nach Anspruch 3, wobei eine ausgegebene Komponente, die auf dem Vorfußbereich (36, 84) angeordnet ist, einen ersten Radius umfasst, und
wobei eine ausgegebene Komponente, die auf dem Mittelfußbereich (34, 82) angeordnet ist, einen zweiten Radius umfasst, der sich von dem ersten Radius unterscheidet.

5. Schuhwerk-Artikel nach Anspruch 1, wobei sich mindestens eine der spiralförmigen ausgegebenen Komponenten in lateraler Richtung über eine mediale Seite (38) des Oberteils (20) hinaus erstreckt.

6. Schuhwerk-Artikel nach Anspruch 1, wobei sich mindestens eine der spiralförmigen ausgegebenen Komponenten auf eine mediale Seite (38) des Oberteils (20) erstreckt.

7. Schuhwerk-Artikel nach Anspruch 1, wobei sich mindestens eine der spiralförmigen ausgegebenen Komponenten in lateraler Richtung über eine laterale Seite (40) des Oberteils (20) hinaus erstreckt.

8. Schuhwerk-Artikel nach Anspruch 1, wobei sich mindestens eine der spiralförmigen ausgegebenen Komponenten auf eine laterale Seite (40) des Oberteils (20) erstreckt.

9. Schuhwerk-Artikel nach Anspruch 1, wobei eine erste spiralförmige ausgegebene Komponente eine erste Anzahl von Schichten (64) der Spiralgeometrie umfasst, und
wobei eine zweite spiralförmige ausgegebene Komponente eine zweite Anzahl von Schichten (64) der Spiralgeometrie umfasst, die sich von der ersten Anzahl von Schichten (64) unterscheidet.

10. Schuhwerk-Artikel nach Anspruch 1, ferner umfassend:
eine Begrenzungskomponente (178), die an einer oberen Linie (53) einer Seitenwand (51) der Sohle (50) angeordnet ist.

11. Schuhwerk-Artikel nach Anspruch 10, wobei das Oberteil (20) ein gestricktes Oberteil (20) umfasst und wobei die Begrenzungskomponente (178) eine erhöhte Strickstruktur des Oberteils (20) ist.

12. Schuhwerk-Artikel nach Anspruch 10, wobei die Begrenzungskomponente (178) einen Abschnitt des Oberteils (20) umfasst, der zusammengenäht ist, um einen Besatz zu bilden.

13. Schuhwerk-Artikel nach Anspruch 10, wobei die Begrenzungskomponente (178) einen Rahmen (120, 130, 140, 150, 160) umfasst, der mit dem Oberteil (20) gekoppelt ist und diesen umgibt.

14. Schuhwerk-Artikel nach Anspruch 13, wobei der Rahmen (120, 130, 140, 150, 160) ein oder mehrere laterale Elemente umfasst, die sich in einer lateralen Richtung unterhalb des Oberteils (20) von einer medialen Seite (38) zu einer lateralen Seite (40) des Oberteils (20) erstrecken.

15. Schuhwerk-Artikel nach Anspruch 13, wobei der Rahmen (120, 130, 140, 150, 160) eine Rinne (133, 144) umfasst, die eingerichtet ist, um die ausgegebene Komponente aufzufangen.

16. Verfahren zum Herstellen eines Schuhwerk-Artikels, wobei das Verfahren umfasst:
Positionieren eines Oberteils (20) auf einem Leisten;
Ausgeben eines Materials von einer Ausgabedüse (110) auf das Oberteil (20) an einer ersten Stelle, während die Düse gesteuert wird, um einer spiralförmigen Bahn (88) zu folgen, wobei das Ausgeben eine erste ausgegebene Komponente mit einer Spiralgeometrie mit übereinander gestapelten Schichten (64) bildet;
Ausgeben des Materials von der Ausgabedüse (110) auf das Oberteil (20) an einer zweiten Stelle, während die Düse gesteuert wird, um einer spiralförmigen Bahn (88) zu folgen, wobei das Ausgeben eine zweite ausgegebene Komponente mit einer Spiralgeometrie mit übereinander gestapelten Schichten (64) bildet; und
Steuern einer Dosierrate und einer Geschwindigkeit der Ausgabedüse (110),
wobei die erste ausgegebene Komponente und die zweite ausgegebene Komponente einen Abschnitt einer Sohle (50) für den Schuhwerk-Artikel bilden.

17. Verfahren nach Anspruch 16, wobei die Spiralgeometrie sowohl der ersten ausgegebenen Komponente als auch der zweiten ausgegebenen Komponente einen hohlen Abschnitt bildet, der von den Schichten (64) umgeben ist, die übereinander gestapelt sind, ferner umfassend:
Ausgeben des Materials in den hohlen Abschnitt der ersten ausgegebenen Komponente und der zweiten ausgegebenen Komponente.

18. Verfahren nach Anspruch 16, wobei die spiralförmige Bahn (88) eine elliptische Form umfasst.

19. Verfahren nach Anspruch 16, ferner umfassend Platzieren einer entfernbaren Befestigungseinrichtung um das Oberteil (20) vor dem Ausgeben des Materials, wobei die entfernbare Befestigungseinrichtung eingerichtet ist, um das ausgegebene Material aufzufangen, um eine äußere Begrenzung der ersten ausgegebenen Komponente und der zweiten ausgegebenen Komponente zu bilden.

20. Verfahren nach Anspruch 16, wobei das Steuern der Dosierrate und der Geschwindigkeit der Ausgabedüse (110) ein Einstellen der Dosierrate oder der Geschwindigkeit für die Ausgabedüse (110) während des Ausgebens des Materials umfasst.

## Revendications

1. Article chaussant comprenant :
une tige (20) ; et
une semelle (50) couplée à la tige (20) et comprenant des composants distribués dotés d'une géométrie spiralée non creuse, chaque composant distribué spiralé s'étendant verticalement avec des couches (64) de la géométrie spiralée empilées les unes sur les autres,
dans lequel les composants distribués spiralés sont disposés adjacents les uns aux autres le long d'une direction longitudinale de la semelle (50).

2. Article chaussant selon la revendication 1, dans lequel les composants distribués sont distribués directement sur la tige (20).

3. Article chaussant selon la revendication 1, dans lequel les composants distribués sont disposés sur une zone d'avant-pied (36, 84), une zone de médio-pied (34, 82) et/ou une zone d'arrière-pied (32, 80) de la semelle (50).

4. Article chaussant selon la revendication 3, dans lequel un composant distribué disposé sur la zone d'avant-pied (36, 84) comprend un premier rayon, et
dans lequel un composant distribué disposé sur la zone de médio-pied (34, 82) comprend un second rayon différent du premier rayon.

5. Article chaussant selon la revendication **1,** dans lequel au moins un des composants distribués spiralés s'étend dans une direction latérale au-delà d'un côté médial (38) de la tige (20).

6. Article chaussant selon la revendication **1,** dans lequel au moins un des composants distribués spiralés s'étend sur un côté médial (38) de la tige (20).

7. Article chaussant selon la revendication **1,** dans lequel au moins un des composants distribués spiralés s'étend dans une direction latérale au-delà d'un côté latéral (40) de la tige (20).

8. Article chaussant selon la revendication 1, dans lequel au moins un des composants distribués spiralés s'étend sur un côté latéral (40) de la tige (20).

9. Article chaussant selon la revendication 1, dans lequel un premier composant distribué spiralé comprend un premier nombre de couches (64) de la géométrie spiralée, et
dans lequel un second composant distribué spiralé comprend un second nombre de couches (64) de la géométrie spiralée différent du premier nombre de couches (64).

10. Article chaussant selon la revendication 1, comprenant en outre :
un composant de délimitation (178) disposé sur une ligne supérieure (53) d'une paroi latérale (51) de la semelle (50).

11. Article chaussant selon la revendication 10, dans lequel la tige (20) comprend une tige (20) en tricot et dans lequel le composant de délimitation (178) est une structure tricotée saillante de la tige (20).

12. Article chaussant selon la revendication 10, dans lequel le composant de délimitation (178) comprend une partie de la tige (20) cousue sur elle-même pour former une bordure.

13. Article chaussant selon la revendication 10, dans lequel le composant de délimitation (178) comprend un cadre (120, 130, 140, 150, 160) couplé à la tige (20) et entourant celle-ci.

14. Article chaussant selon la revendication 13, dans lequel le cadre (120, 130, 140, 150, 160) comprend un ou plusieurs éléments latéraux qui s'étendent dans une direction latérale en dessous de la tige (20), depuis un côté médial (38) vers un côté latéral (40) de la tige (20).

15. Article chaussant selon la revendication 13, dans lequel le cadre (120, 130, 140, 150, 160) comprend un sillon (133, 144) conçu pour saisir le composant distribué.

16. Procédé de fabrication d'un article chaussant, le procédé comprenant :
le positionnement d'une tige (20) sur une forme ;
la distribution d'un matériau depuis une buse de distribution (110) sur la tige (20) à un premier endroit tout en commandant la buse afin qu'elle suive un chemin spiralé (88), la distribution formant un premier composant distribué présentant une géométrie spiralée avec des couches (64) empilées les unes sur les autres ;
la distribution du matériau depuis la buse de distribution (110) sur la tige (20) à un second endroit tout en commandant la buse afin qu'elle suive un chemin spiralé (88), la distribution formant un second composant distribué présentant une géométrie spiralée avec des couches (64) empilées les unes sur les autres ; et
la commande d'un débit de dosage et d'une vitesse de la buse de distribution (110),
dans lequel le premier composant distribué et le second composant distribué forment une partie d'une semelle (50) pour l'article chaussant.

17. Procédé selon la revendication 16, dans lequel la géométrie spiralée de chacun du premier composant distribué et du second composant distribué forme une partie creuse entourée par les couches (64) empilées les unes sur les autres, comprenant en outre :
la distribution du matériau dans la partie creuse du premier composant distribué et du second composant distribué.

18. Procédé selon la revendication 16, dans lequel le chemin spiralé (88) comprend une forme elliptique.

19. Procédé selon la revendication 16, comprenant en outre le placement d'un accessoire amovible autour de la tige (20) avant de distribuer le matériau, l'accessoire amovible étant conçu pour saisir le matériau distribué afin de former une délimitation extérieure du premier composant distribué et du second composant distribué.

20. Procédé selon la revendication 16, dans lequel la commande du débit de dosage et de la vitesse pour la buse de distribution (110) comprend le réglage du débit de dosage ou de la vitesse pour la buse de distribution (110) tout en distribuant le matériau.
